# EUROPEAN PATENT APPLICATION

(11) **EP 4 745 418 A1**
(43) Date of publication of application: **20.05.2026**
(21) Application number: 24866988.9
(22) Date of filing: 28.06.2024
(51) Int. Cl.: F16C 11/12

(54) **ROTATING MECHANISM AND FOLDABLE DISPLAY TERMINAL**

(30) Priority: 22.09.2023 CN 202311244120
(71) Applicant: Huawei Technologies Co., Ltd., Shenzhen, Guangdong 518129 (CN)
(72) Inventor: LIU, Senxin, Shenzhen, Guangdong 518129 (CN); CHENG, Tianyu, Shenzhen, Guangdong 518129 (CN); ZHAO, Menglong, Shenzhen, Guangdong 518129 (CN); GONG, Lexing, Shenzhen, Guangdong 518129 (CN); ZOU, Lin, Shenzhen, Guangdong 518129 (CN); YUAN, Shenglan, Shenzhen, Guangdong 518129 (CN)
(74) Representative: Thun, Clemens
(86) International application number: PCT/CN2024/102413
(87) International publication number: WO 2025/060569

(57) **Abstract**

Disclosed are a rotating mechanism (10) and a foldable display terminal (1), which relate to the field of electronic products. The rotating mechanism includes a base (11) and two door plate assemblies (12) located on two opposite sides of the base (11). The door plate assembly (12) includes a door plate body (121), the door plate body (121) has a first arc sliding groove (122), the base includes a first sliding block (111) that fits with the first arc sliding groove (122), and the first sliding block (111) is mounted in the first arc sliding groove (122). At least one door plate assembly (12) further includes a first extrusion member (14), the first extrusion member (14) is mounted on the base (11), the first extrusion member (14) squeezes the door plate body (121) in a first target direction (X), and the first target direction (X) is perpendicular to a sliding direction (S1) of the first sliding block (111), and points to a side wall that is of the first sliding block (111) and that faces the first arc sliding groove (122). The first extrusion member (14) has a function of squeezing the door plate body (121), and the first extrusion member (14) can squeeze the door plate body (121) toward a side wall of the first arc sliding groove (122), so that a fit clearance between the first sliding block (111) and the first arc sliding groove (122) is reduced. This helps alleviate shaking of the rotating mechanism during use.

## Description

This application claims priority to Chinese Patent Application No. 202311244120.1, filed with the China National Intellectual Property Administration on September 22, 2023 and entitled "ROTATING MECHANISM AND FOLDABLE DISPLAY TERMINAL", which is incorporated herein by reference in its entirety.

### TECHNICAL FIELD

Embodiments of this application relate to the field of electronic products, and in particular, to a rotating mechanism and a foldable display terminal.

### BACKGROUND

With commercialization of flexible displays, mobile phones with foldable flexible displays, tablet computers with foldable flexible displays, wearable electronic devices with foldable flexible displays, and the like are an important evolution direction of future intelligent terminal devices. In an unfolded state, a foldable display terminal can have a large display area, which improves a movie watching effect. In a folded state, the foldable display terminal can have a small size, which is convenient for a user to carry.

The foldable display terminal includes at least a flexible display, two mechanical parts configured to carry the flexible display, and a rotating mechanism. The two mechanical parts are connected to two sides of the rotating mechanism. During actual use, the rotating mechanism drives the two mechanical parts to rotate, to enable the foldable display terminal to be in the folded state, a hover state, or the unfolded state. However, shaking of the rotating mechanism in a related technology may lead to shaking of the mechanical part of the foldable display terminal.

### SUMMARY

An objective of embodiments of this application is to provide a rotating mechanism and a foldable display terminal, to alleviate shaking of a rotating mechanism in a related technology.

To achieve the foregoing objective, embodiments of this application provide the following solutions.

Provided is a rotating mechanism, including a base and two door plate assemblies located on two opposite sides of the base. The door plate assembly includes a door plate body, the door plate body has a first arc sliding groove, the base includes a first sliding block that fits with the first arc sliding groove, and the first sliding block is mounted in the first arc sliding groove. Through the foregoing arrangement, the base can rotate relative to the door plate assembly, so that the rotating mechanism is folded or unfolded.

Based on the foregoing structure, at least one door plate assembly further includes a first extrusion member, the first extrusion member is mounted on the base, the first extrusion member squeezes the door plate body in a first target direction, and the first target direction is perpendicular to a sliding direction of the first sliding block, and points to a side wall that is of the first sliding block and that faces the first arc sliding groove. Herein, a sliding direction of the first sliding block is an extension direction of the first arc sliding groove. Through the foregoing arrangement, the first extrusion member has a function of squeezing the door plate body, and the first extrusion member can squeeze the door plate body toward a side wall of the first arc sliding groove, so that a clearance between two opposite side walls of the first arc sliding groove and the first sliding block is reduced, that is, a fit clearance between the first sliding block and the first arc sliding groove is reduced. This helps alleviate shaking of the rotating mechanism during use.

In some embodiments, the first extrusion member includes an elastic sheet, the elastic sheet is connected to the base, and the elastic sheet is in elastic contact with the door plate body. Because the elastic sheet can generate elastic deformation, to apply an elastic restoring force of the elastic sheet to the door plate body in the first target direction, the fit clearance between the first sliding block and the first arc sliding groove is reduced, so that the shaking of the rotating mechanism during use is alleviated. In addition, because the elastic sheet can be elastically deformed, the elastic sheet is in elastic contact with the first sliding block, to prevent the first sliding block from jamming during rotation.

In some embodiments, the base further includes a first mounting groove, and a side wall of the first mounting groove protrudes to form the first sliding block. The door plate body includes a side surface and a bottom surface, the side surface faces the side wall of the first mounting groove, the side surface is recessed to form the first arc sliding groove, the bottom surface faces a bottom wall of the first mounting groove, and the elastic sheet is located between the bottom wall of the first mounting groove and the bottom surface. Through the foregoing arrangement, the first extrusion member is prevented from occupying space outside the base. This helps improve structural compactness and implement miniaturization of the rotating mechanism.

In some embodiments, the elastic sheet includes a first elastic arm and a second elastic arm. The first elastic arm is connected to the second elastic arm, an included angle between the first elastic arm and the second elastic arm is an obtuse angle, and one of the first elastic arm and the second elastic arm is in elastic contact with the door plate body. When the first elastic arm is in elastic contact with the door plate body, the first elastic arm can squeeze the door plate body, and the second elastic arm can achieve a cushioning function, so that the fit clearance between the first sliding block and the first arc sliding groove is reduced, thereby alleviating the shaking of the rotating mechanism during use.

In some embodiments, an end that is of one elastic arm and that is away from the other elastic arm has a mounting hole, the side wall of the first mounting groove has a fitting hole, the first extrusion member further includes a pin shaft, and the pin shaft penetrates the mounting hole and the fitting hole. Through the foregoing arrangement, the elastic sheet may rotate relative to the pin shaft, so that the elastic sheet is rotatably connected to the base. This helps improve a cushioning effect of the elastic sheet, and further prevent the rotating mechanism from jamming during rotation.

In some embodiments, two fastening brackets located on the two opposite sides of the base are further included. The fastening bracket has a second arc sliding groove, the door plate assembly further includes a second sliding block that fits with the second arc sliding groove, and a central axis of the second arc sliding groove is parallel to a central axis of the first arc sliding groove. Through the foregoing arrangement, the fastening bracket can rotate relative to the door plate assembly, to drive the mechanical part connected to the fastening bracket to rotate relative to the door plate assembly.

Based on the foregoing structure, the at least one door plate assembly further includes a second extrusion member, the second extrusion member is mounted on the fastening bracket, the second extrusion member squeezes the second sliding block in a second target direction, and the second target direction is perpendicular to a sliding direction of the second sliding block, and points to a side wall that is of the second arc sliding groove and that faces the second sliding block. Through the foregoing arrangement, the second extrusion member squeezes the second sliding block toward a side wall of the second arc sliding groove, so that a fit clearance between the second sliding block and the second arc sliding groove is reduced, thereby helping further alleviate the shaking of the rotating mechanism during use.

In some embodiments, the second extrusion member includes a wear-resistant block, and hardness of the wear-resistant block is less than hardness of the fastening bracket. The foregoing arrangement helps implement hard extrusion between the wear-resistant block and the second sliding block, and alleviate jamming during rotation of the second sliding block.

In some embodiments, the wear-resistant block includes a contact surface that is in contact with the second sliding block, and roughness of the contact surface is less than roughness of a groove wall of the second arc sliding groove. Because the roughness of the contact surface is less than the roughness of the second arc sliding groove, a friction coefficient between the wear-resistant block and the second sliding block is reduced. This helps improve jamming during rotation of the second sliding block.

In some embodiments, a material of the wear-resistant block includes POM and/or PEEK. The POM and the PEEK have high wear resistance. This helps prevent the second extrusion member from wearing after being used for a long time. In addition, the POM and the PEEK further have self-lubricating properties. This helps further reduce the friction coefficient between the wear-resistant block and the second sliding block, and further improve rotation smoothness of the second sliding block.

In some embodiments, the side wall that is of the second arc sliding groove and that faces the second sliding block is recessed to form a second mounting groove, and at least a part of the wear-resistant block is located in the second mounting groove. Through the foregoing arrangement, the wear-resistant block is connected to the fastening bracket.

In some embodiments, there is a communication opening between the second mounting groove and the second arc sliding groove, the wear-resistant block further includes a fitting surface that is provided opposite to the contact surface, and an area of the communication opening is less than an area of the fitting surface. Through the foregoing arrangement, because the area of the communication opening is less than the area of the fitting surface, the wear-resistant block can be prevented from falling off from the communication opening during movement of the rotating mechanism. This helps improve connection reliability and structural movement stability.

In some embodiments, the rotating mechanism further includes the rotating mechanism in any one of the foregoing embodiments, a first mechanical part, a second mechanical part, and a flexible display. The first mechanical part and the second mechanical part are connected to two sides of the rotating mechanism. The rotating mechanism and the flexible display are located on a same side of the first mechanical part and the second mechanical part, and are connected to the first mechanical part and the second mechanical part. The flexible display is further connected to the rotating mechanism. The foldable display terminal provided in embodiments of this application includes the foregoing rotating mechanism, and therefore has all the foregoing beneficial effects. Details are not described herein again.

### BRIEF DESCRIPTION OF DRAWINGS

FIG. 1 is a diagram of a structure of a foldable display terminal according to an embodiment of this application;
FIG. 2 is a diagram of a structure of a foldable display terminal in an unfolded state according to an embodiment of this application;
FIG. 3 is a diagram of a structure of a foldable display terminal in a folded state according to an embodiment of this application;
FIG. 4 is a diagram of assembly of a rotating mechanism with a first mechanical part and a second mechanical part according to an embodiment of this application;
FIG. 5 is a diagram of a structure of a rotating mechanism according to an embodiment of this application;
FIG. 6 is a sectional view of the rotating mechanism in FIG. 5 along a section line A-A;
FIG. 7 is a partially enlarged view at a position M1 in FIG. 6;
FIG. 8 is a sectional view of a base in FIG. 5 along a section line A-A;
FIG. 9 is a sectional view of a door plate assembly in FIG. 5 in a direction opposite to a section line A-A;
FIG. 10 is a sectional view of the rotating mechanism in FIG. 5 along a section line B-B;
FIG. 11 is a partially enlarged view at a position M2 in FIG. 10;
FIG. 12 is a partially enlarged view at a position N in FIG. 5;
FIG. 13 is a diagram of a structure of a wear-resistant block according to an embodiment of this application; and
FIG. 14 is a sectional view of the wear-resistant block in FIG. 13 along a section line C-C.

### DESCRIPTION OF EMBODIMENTS

The following describes the technical solutions in embodiments of this application with reference to accompanying drawings in embodiments of this application. It is clear that the described embodiments are merely a part rather than all of embodiments of this application.

The terms "first", "second", and the like mentioned below are merely intended for ease of description, and shall not be understood as an indication or implication of relative importance or implicit indication of a quantity of indicated technical features. Therefore, a feature defined by "first", "second", or the like may explicitly or implicitly include one or more features. In descriptions of this application, unless otherwise stated, "a plurality of" means two or more.

In embodiments of this application, the term "example", "for example", or the like indicates giving an example, an illustration, or a description. Any embodiment or design scheme described as an "example" or "for example" in embodiments of this application should not be explained as being more preferred or having more advantages than another embodiment or design scheme. To be precise, use of the term "example", "for example", or the like is intended to present a related concept in a specific manner.

In embodiments of this application, for example, on, under, left, right, front, and rear are relative direction indications used to explain structures and movement of different parts in this application. These indications are appropriate when components are in positions shown in the figure. However, if descriptions of the positions of the components change, these direction indications may correspondingly change.

An embodiment of this application provides a foldable display terminal. The foldable display terminal may be a terminal product, for example, a mobile phone (mobile phone), a tablet computer (pad), a television, an intelligent wearable product (for example, a smartwatch or a smart band), a virtual reality (VR, virtual reality) device, or an augmented reality (AR, augmented reality) device.

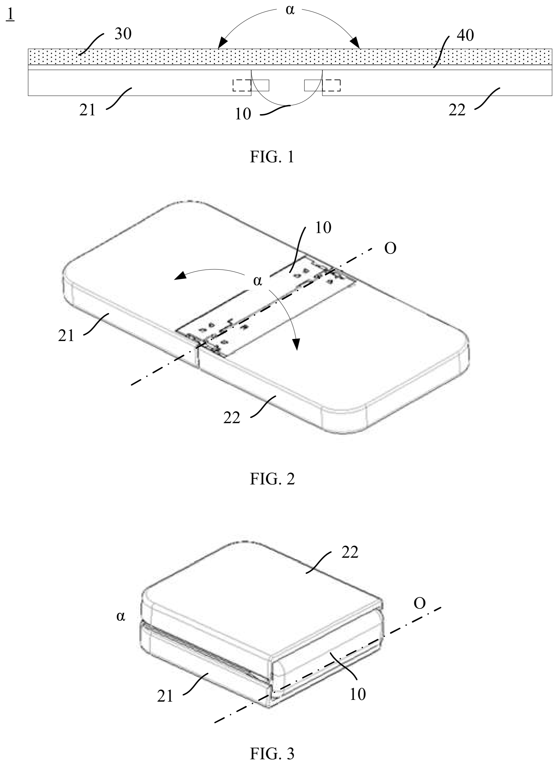

FIG. 1 is a diagram of a structure of a foldable display terminal according to an embodiment of this application. As shown in FIG. 1, the foldable display terminal 1 may include a flexible display 30. The flexible display 30 may be an active-matrix organic light-emitting diode (active-matrix organic light-emitting diode, AMOLED) display.

Because the AMOLED display is a self-luminous display, a backlight module (backlight module, BLM) is not required to be disposed. Therefore, when a substrate of the AMOLED display is made of a flexible resin material, for example, polyethylene terephthalate (polyethylene terephthalate, PET), the AMOLED display can have a characteristic of bendability.

In addition, refer to FIG. 1. The foldable display terminal 1 further includes a first mechanical part 21, a second mechanical part 22, and a rotating mechanism 10. The rotating mechanism 10 is connected between the first mechanical part 21 and the second mechanical part 22. The first mechanical part 21 and the second mechanical part 22 may rotate around the rotating mechanism 10 separately. The first mechanical part 21 and the second mechanical part 22 may be housings, or may be middle frame structures in an electronic device. The first mechanical part 21 and the second mechanical part 22 may be configured to: carry the flexible display 30, to keep the flexible display 30 flat to a greatest extent during use; and protect a non-display surface of the flexible display 30.

A part of the flexible display 30 is fastened to the first mechanical part 21 through an adhesive layer 40, a part of the flexible display 30 is fastened to the second mechanical part 22 through the adhesive layer 40, and a part of the flexible display 30 is fastened to the rotating mechanism 10 through the adhesive layer 40. The adhesive layer 40 may be a thin film layer formed by coating an adhesive. A specific form of the adhesive layer 40 is not limited in embodiments of this application. In some embodiments, another electronic element, for example, a camera, a headset, an earpiece, a button, or a battery, may be disposed on the first mechanical part 21 and the second mechanical part 22. The another electronic element disposed on the first mechanical part 21 and the second mechanical part 22 is not limited in embodiments of this application.

The first mechanical part 21 and the second mechanical part 22 may rotate relative to the rotating mechanism 10. FIG. 2 is a diagram of a structure of a foldable display terminal 1 in an unfolded state according to an embodiment of this application. FIG. 3 is a diagram of a structure of a foldable display terminal 1 in a folded state according to an embodiment of this application. With reference to FIG. 2 and FIG. 3, the first mechanical part 21 and the second mechanical part 22 may rotate along an axis O of the rotating mechanism 10 separately, to drive the flexible display 30 to fold or unfold. As shown in FIG. 2, when an included angle α between the first mechanical part 21 and the second mechanical part 22 is 180°, the flexible display 30 is in the unfolded state. When the included angle α between the first mechanical part 21 and the second mechanical part 22 is reduced to a preset angle, the flexible display 30 may be in a hover state. Further, refer to FIG. 3. When the included angle α between the first mechanical part 21 and the second mechanical part 22 is reduced to 0°, the flexible display 30 is in the folded state.

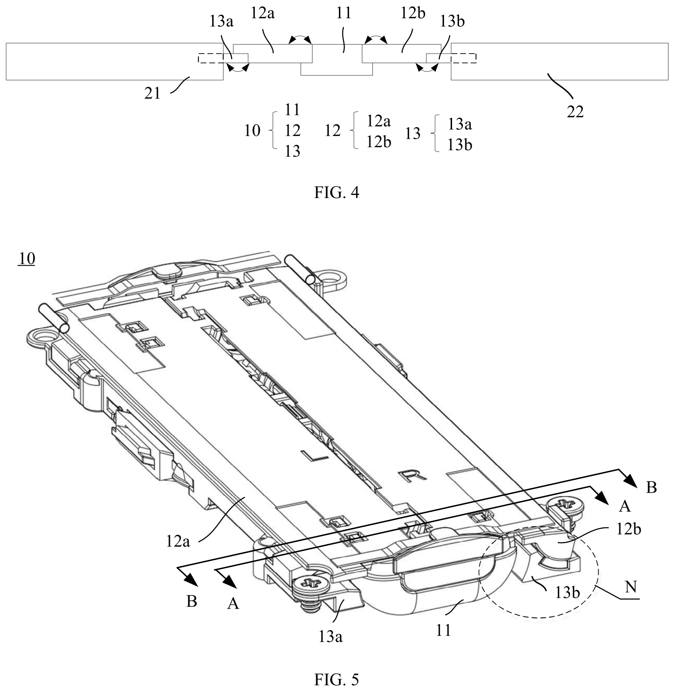

FIG. 4 is a diagram of assembly of a rotating mechanism 10 with a first mechanical part 21 and a second mechanical part 22 according to an embodiment of this application. As shown in FIG. 4, the rotating mechanism 10 includes a base 11 and two door plate assemblies 12 located on two opposite sides of the base 11, and the door plate assembly 12 can rotate relative to the base 11. The two door plate assemblies 12 include a door plate assembly 12a located on a left side of the base 11 and a door plate assembly 12b located on a right side of the base 11. The rotating mechanism 10 may further include two fastening brackets 13 located on the two opposite sides of the base 11. The two fastening brackets 13 include a fastening bracket 13a located on the left side of the base 11 and a fastening bracket 13b located on the right side of the base 11. The fastening bracket 13a is connected to the first mechanical part 21, and is rotatably connected to the door plate assembly 12a. The other fastening bracket 13b is connected to the second mechanical part 22, and is rotatably connected to the other door plate assembly 12b. Further, a rotation axis between the door plate assembly 12 and the base 11 is parallel to a rotation axis between the fastening bracket 13 and the door plate assembly 12.

Through the foregoing arrangement, the first mechanical part 21 can drive the fastening bracket 13a to rotate, to further drive the door plate assembly 12a to rotate relative to the base 11. Similarly, the second mechanical part 22 can drive the other fastening bracket 13b to rotate, to further drive the other door plate assembly 12b to rotate relative to the base 11.

In some embodiments, a revolute joint may be formed between one door plate assembly 12 and the base 11. For example, the door plate assembly 12 may have an arc sliding groove, and correspondingly, the base 11 may have an arc sliding post that fits with the arc sliding groove. When the arc sliding post slides in the arc sliding groove, the door plate assembly 12 may rotate relative to the base 11. However, due to a specific error in processing of a part or component, there is a processing deviation for a surface of the arc sliding post or the arc sliding groove. When the arc sliding post is actually assembled into the arc sliding groove, a clearance between the arc sliding post and the arc sliding groove may be increased, resulting in unstable fitting between the door plate assembly 12 and the base 11. As a result, the rotating mechanism 10 shakes, deteriorating user experience.

In some embodiments, to reduce a fit clearance between revolute joints, a processing precision of the part or component needs to increase, for example, a tolerance zone of the part or component needs to be limited to be less than or equal to 0.03 mm. However, as the processing precision of the part or component increases, processing costs of the part or component also increases accordingly.

In some other embodiments, to reduce the fit clearance in the revolute joint, a selective assembly method is usually used for assembly. For example, based on a tolerance range of the arc sliding post, arc sliding posts may be classified into two grades: a small-sized sliding post and a large-sized sliding post. Correspondingly, based on a tolerance range of the arc sliding groove, arc sliding grooves may be classified into two grades: a small-sized sliding groove and a large-sized sliding groove. During selective assembly, the small-sized sliding post and the small-sized sliding groove are assembled, and the large-sized sliding post and the large-sized sliding groove are assembled. However, this selective assembly method requires accurate measurement of parts or components to implement classification, which increases labor costs. In addition, manual sorting still experiences issues of misplacement and misassembly. Consequently, a specific batch of parts or components cannot match the grades, resulting in material stagnation.

In view of this, the rotating mechanism 10 provided in this embodiment of this application further includes an extrusion component configured to squeeze the revolute joint, and the fit clearance in the revolute joint is reduced by using the extrusion component.

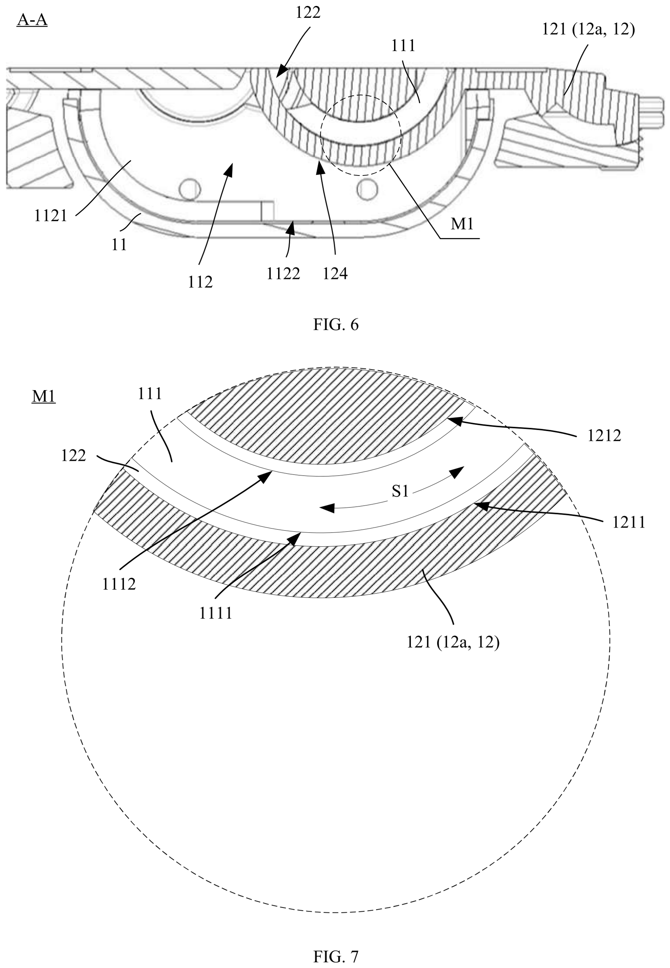

FIG. 5 is a diagram of a structure of a rotating mechanism 10 according to an embodiment of this application. FIG. 6 is a sectional view of the rotating mechanism 10 in FIG. 5 along a section line A-A. As shown in FIG. 5 and FIG. 6, the door plate assembly 12 includes a door plate body 121, the door plate body 121 has a first arc sliding groove 122, the base 11 includes a first sliding block 111 that fits with the first arc sliding groove 122, and the first sliding block 111 is mounted in the first arc sliding groove 122. When the first sliding block 111 slides along the first arc sliding groove 122, the first sliding block 111 may drive the base 11 to rotate relative to the door plate assembly 12.

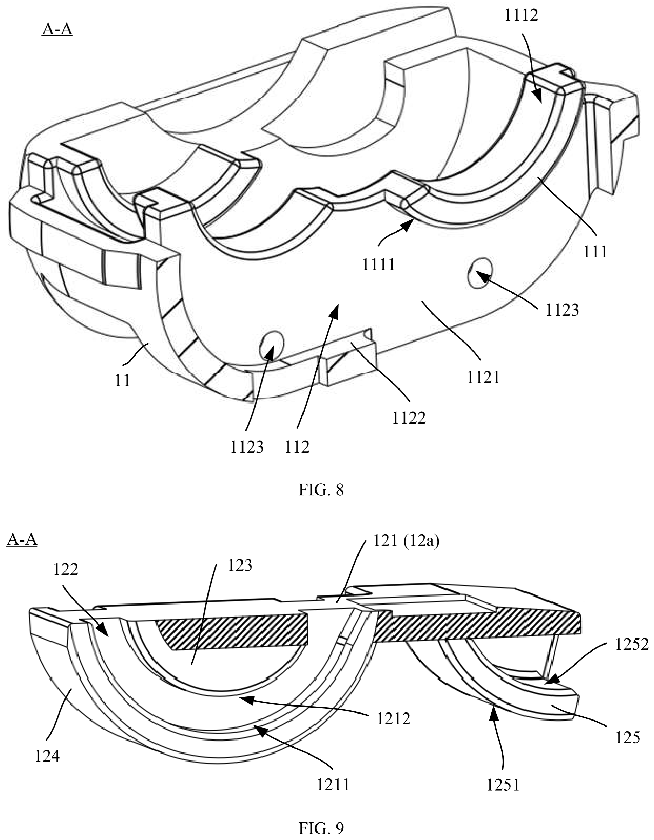

FIG. 7 is a partially enlarged view at a position M1 in FIG. 6. FIG. 8 is a sectional view of a base 11 in FIG. 5 along a section line A-A. FIG. 9 is a sectional view of a door plate assembly 12 in FIG. 5 in a direction opposite to a section line A-A. As shown in FIG. 7 and FIG. 9, the first arc sliding groove 122 may include a first side wall 1211 and a second side wall 1212 that are provided opposite to each other (the first side wall 1211 may be a lower side wall of the first arc sliding groove 122 in FIG. 7, and the second side wall 1212 may be an upper side wall of the first arc sliding groove 122 in FIG. 7). Both the first side wall 1211 and the second side wall 1212 are arc surfaces, and the first side wall 1211 and the second side wall 1212 are bent in a same direction into arcs.

Correspondingly, as shown in FIG. 7 and FIG. 8, the first sliding block 111 is roughly of an arc block. The first sliding block 111 may include a first sliding wall 1111 and a second sliding wall 1112 that are provided opposite to each other (the first sliding wall 1111 may be a lower side wall of the first sliding block 111 in FIG. 7, and the second sliding wall 1112 may be an upper side wall of the first sliding block 111 in FIG. 7). The first sliding wall 1111 is an arc surface that fits with the first side wall 1211, and the second sliding wall 1112 is an arc surface that fits with the second side wall 1212. Through the foregoing arrangement, the first sliding block 111 may slide in the first arc sliding groove 122, so that the base 11 rotates relative to the door plate assembly 12. A sliding direction S1 of the first sliding block 111 is an extension direction of the first arc sliding groove 122.

When the first sliding block 111 is slidably disposed in the first arc sliding groove 122, the first side wall 1211 is located on a side that is of the first sliding block 111 and on which the first sliding wall 1111 is located, and the second side wall 1212 is located on a side that is of the first sliding block 111 and on which the second sliding wall 1112 is located. To ensure smooth sliding of the first sliding block 111 in the first arc sliding groove 122, the first sliding block 111 is usually in a clearance fit with a second arc sliding groove 132. As shown in FIG. 7, there is a specific clearance between the first side wall 1211 and the first sliding wall 1111, and between the second side wall 1212 and the second sliding wall 1112.

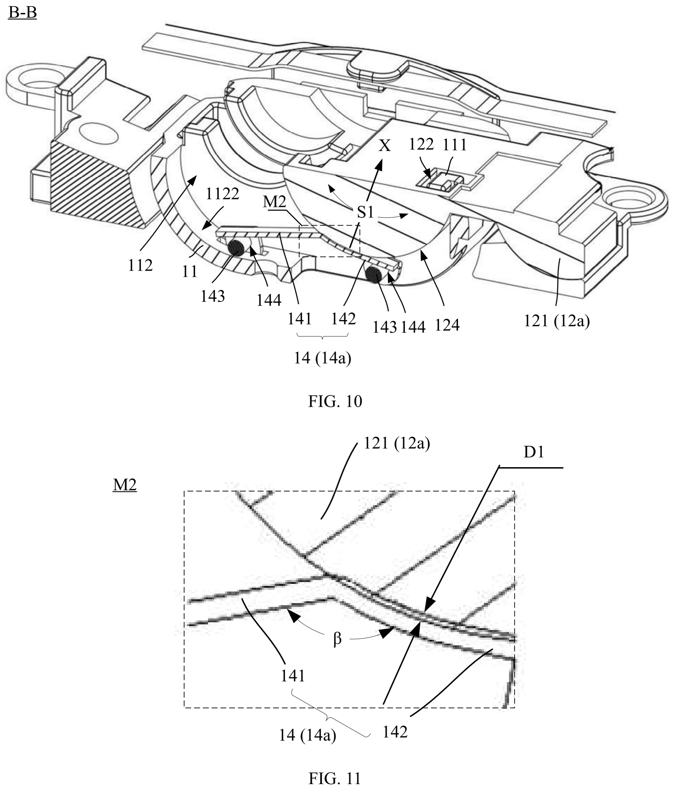

FIG. 10 is a sectional view of the rotating mechanism 10 in FIG. 5 along a section line B-B. As shown in FIG. 10, in the rotating mechanism 10 provided in this embodiment of this application, at least one door plate assembly 12 further includes a first extrusion member 14. In some embodiments, one of the two door plate assemblies 12 includes the first extrusion member 14, or each of the two door plate assemblies 12 includes the first extrusion member 14.

In some embodiments, the first extrusion member is mounted on the base 11. Refer to FIG. 10 and FIG. 8. The base 11 may have a first mounting groove 112, and the first extrusion member 14 may be mounted in the first mounting groove 112. A side wall 1121 of the first mounting groove may protrude to form the first sliding block 111, and a part of the door plate body 121 may extend into the first mounting groove 112, so that the first arc sliding groove 122 located in the door plate body 121 can fit with the first sliding block 111. With reference to FIG. 9, the door plate body 121 that extends into the first mounting groove 112 may include a side surface 123 that faces the side wall 1121 of the first mounting groove and a bottom surface 124 that faces a bottom wall 1122 of the first mounting groove, and the side surface 123 may be recessed to form the first arc sliding groove 122. Correspondingly, the first extrusion member 14 may be located between the bottom surface 124 of the door plate body 121 and the bottom wall 1122 of the first mounting groove, to prevent the first extrusion member 14 from occupying space outside the base 11. This helps improve structural compactness and implement miniaturization of the rotating mechanism 10.

In some other embodiments, the first extrusion member 14 may alternatively be mounted on a side wall of the base 11. Correspondingly, the side wall of the base 11 may be recessed to form the first mounting groove 112. A mounting position of the first extrusion member 14 is not specifically limited in embodiments of this application.

The first extrusion member 14 squeezes the door plate body 121 in a first target direction X. The first target direction X is perpendicular to the sliding direction S1 of the first sliding block 111, and points to a side wall that is of the first sliding block 111 and that faces the first arc sliding groove 122. For example, the first extrusion member 14 may squeeze the bottom surface 124 of the door plate body, and the clearance between the second sliding wall 1112 of the first sliding block 111 and the second side wall 1212 of the first arc sliding groove 122 is reduced under an extrusion action of the first extrusion member 14 on the door plate body 121. When an extrusion force of the first extrusion member 14 on the door plate body 121 is large enough, zero clearance between the second sliding wall 1112 of the first sliding block 111 and the second side wall 1212 of the first arc sliding groove 122 can be achieved. This helps alleviate shaking of the rotating mechanism 10 during use. Herein, the first target direction X may be a direction from the bottom surface 124 of the door plate body 121 to the second side wall 1212.

In conclusion, the first extrusion member 14 squeezes the door plate body 121 toward a side wall of the first sliding block 111, so that the clearance between the second side wall 1212 of the first arc sliding groove 122 and the second sliding wall 1112 of the first sliding block 111 is reduced, that is, a fit clearance between the first sliding block 111 and the first arc sliding groove 122 is reduced. This helps alleviate the shaking of the rotating mechanism 10 during use.

Further, the first mounting groove 112 includes two side walls that are provided opposite to each other, and each side wall may have the first sliding block 111. Correspondingly, the door plate body 121 includes two side surfaces that are provided opposite to each other, and each side surface may have the first arc sliding groove 122. One arc sliding groove fits with one first sliding block 111. This helps improve stability of rotation of the door plate assembly 12 relative to the base 11.

In some embodiments, the first extrusion member 14 may include an elastic sheet 14a. For example, a material of the elastic sheet 14a may include spring steel. The spring steel has good elasticity to withstand a heavy load without plastic deformation, has high fatigue strength, and has long service life under repeated loading. In addition, the spring steel further has specific toughness and plasticity, preventing sudden brittle fracture under an action of an impact force.

The elastic sheet 14a may be connected to the base 11, and the elastic sheet 14a may be in elastic contact with the door plate body 121. As described in the foregoing embodiment, the elastic sheet 14a may be located in the first mounting groove 112. In some embodiments, one end of the elastic sheet 14a may be welded to the side wall 1121 of the first mounting groove, and the other end of the elastic sheet 14a may be in elastic contact with the bottom surface 124 of the door plate body 121. Herein, the "elastic contact" may be understood as that interaction forces generated through contact between the elastic sheet 14a and the door plate body 121 can enable the elastic sheet 14a to generate elastic deformation. When the door plate body 121 rotates, the elastic sheet 14a is elastically deformed. In some other embodiments, two ends of the elastic sheet 14a may be further detachably connected to the base 11 separately. For example, the two ends of the elastic sheet 14a may be fastened to the side wall 1121 of the first mounting groove through threading, and a part that is of the elastic sheet 14a and that is located at a center position may be in elastic contact with the bottom surface 124 of the door plate body. The elastic sheet 14a is detachably connected to the base 11, so that quick assembly and disassembly are implemented during replacement and maintenance of the elastic sheet 14a.

For example, because the elastic sheet 14a can generate elastic deformation, to apply an elastic restoring force of the elastic sheet 14a to the door plate body 121 in the first target direction X, the fit clearance between the first sliding block 111 and the first arc sliding groove 122 is reduced, so that the shaking of the rotating mechanism 10 during use is alleviated. In addition, because the elastic sheet 14a can be elastically deformed, the elastic sheet 14a is in elastic contact with the first sliding block 111, to prevent the first sliding block 111 from jamming during rotation.

Based on the foregoing structure, the elastic sheet 14a may be in interference fit with the door plate body 121. "Interference fit" means that the elastic sheet 14a is in contact with the door plate body 121, and the elastic sheet 14a is elastically deformed. A magnitude of interference between the elastic sheet 14a and the door plate body 121 is adjusted, so that an assembled elastic sheet 14a can always be in an elastically deformed state. Herein, the "magnitude of interference" may be understood as a deformation amount of the elastic sheet 14a after being elastically deformed. FIG. 11 is a partially enlarged view at a position M2 in FIG. 10. Refer to FIG. 11. A value range of the magnitude D1 of interference between the elastic sheet 14a and the door plate body 121 may range from 0.05 mm to 0.1 mm. For example, the magnitude D1 of interference between the elastic sheet 14a and the door plate body 121 may be 0.05 mm, 0.07 mm, 0.09 mm, or 0.1 mm. When the magnitude D1 of interference between the elastic sheet 14a and the door plate body 121 approaches 0.05 mm, the deformation amount of the elastic sheet 14a is small, that is, the elastic restoring force applied by the elastic sheet 14a to the door plate body 121 is small. This helps ensure smooth rotation of the door plate body 121. When the magnitude D1 of interference between the elastic sheet 14a and the door plate body 121 approaches 0.1 mm, the elastic restoring force applied by the elastic sheet 14a to the door plate body 121 is large. This helps reduce the fit clearance between the first sliding block 111 and the first arc sliding groove 122, thereby alleviating the shaking of the rotating mechanism 10 during use.

It may be understood that, because the foldable display terminal 1 is frequently used, wear between the first sliding block 111 and the first arc sliding groove 122 occurs after the rotating mechanism 10 rotates a plurality of times. As a result, the clearance between the first sliding block 111 and the first arc sliding groove 122 is further increased, aggravating the shaking of the rotating mechanism 10.

However, in this embodiment of this application, the magnitude D1 of interference between the elastic sheet 14a and the first sliding block 111 is adjusted, so that the elastic sheet 14a can keep in the elastically deformed state. After the first sliding block 111 is worn, the elastic sheet 14a continues to squeeze the first sliding block 111 under an action of the elastic restoring force, and still keeps in the elastically deformed state, thereby alleviating aggravation of the shaking of the worn first sliding block 111.

Refer to FIG. 10. The elastic sheet 14a may include a first elastic arm 141 and a second elastic arm 142, and the first elastic arm 141 is connected to the second elastic arm 142. The first elastic arm 141 and the second elastic arm 142 may be formed by bending same elastic steel. In other words, the first elastic arm 141 and the second elastic arm 142 may be integrally formed. Alternatively, the first elastic arm 141 may be welded to the second elastic arm 142. Further, an included angle between the first elastic arm 141 and the second elastic arm 142 is an obtuse angle. With reference to FIG. 11, setting of the included angle β between the first elastic arm 141 and the second elastic arm 142 helps adjust an elastic force of the elastic sheet 14a. In addition, because the included angle β between the first elastic arm 141 and the second elastic arm 142 is the obtuse angle, the elastic sheet 14a occupies small space in a thickness direction of the base 11. This helps implement lightness and thinness of the rotating mechanism 10, and further implement lightness and thinness of the foldable display terminal 1.

Further, one of the first elastic arm 141 and the second elastic arm 142 is in contact with the door plate body 121. For example, an elastic arm on a left side in a position in FIG. 10 may be the first elastic arm 141, and an elastic arm on a right side in a position in FIG. 10 may be the second elastic arm 142. When the first elastic arm 141 is in elastic contact with the door plate body 121, the first elastic arm 141 can squeeze the door plate body 121, and the second elastic arm 142 can achieve a cushioning function, so that the fit clearance between the first sliding block 111 and the first arc sliding groove 122 is reduced, thereby alleviating the shaking of the rotating mechanism 10 during use.

Based on the foregoing structure, with reference to FIG. 8 and FIG. 10, an end that is of one elastic arm and that is away from the other elastic arm may have a mounting hole 144, the side wall 1121 of the first mounting groove may have a fitting hole 1123, the first extrusion member 14 further includes a pin shaft 143, and the pin shaft 143 penetrates the mounting hole 144 and the fitting hole 1123. Through the foregoing arrangement, the elastic sheet 14a may rotate relative to the pin shaft 143, so that the elastic sheet 14a is rotatably connected to the base 11. This helps improve a cushioning effect of the elastic sheet 14a, and further prevent the rotating mechanism 10 from jamming during rotation.

Certainly, a shape of the elastic sheet 14a may alternatively not be limited to the structure in the foregoing embodiment. The shape of the elastic sheet 14a is not specifically limited in embodiments of this application. In some embodiments, the elastic sheet 14a may alternatively be bent into a plurality of elastic arms, and each elastic arm may be roughly of a flat plate structure. For example, the elastic sheet 14a may include three elastic arms. An elastic arm located in a center position is configured to be in elastic contact with the door plate body 121. Alternatively, the elastic sheet 14a may alternatively be roughly of an arc plate structure. Correspondingly, the elastic sheet 14a may be rotatably connected to the side wall 1121 of the first mounting groove through the pin shaft 143. In some other embodiments, the elastic sheet 14a may alternatively be roughly of a flat plate structure. Correspondingly, one end of the elastic sheet 14a may be welded to the side wall 1121 of the first mounting groove.

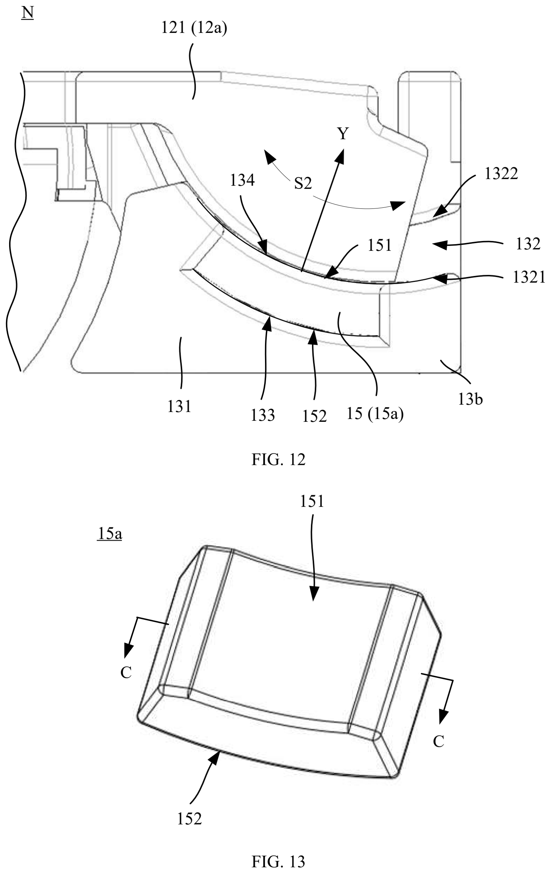

FIG. 12 is a partially enlarged view at a position N in FIG. 5. As shown in FIG. 12, in some embodiments, the fastening bracket 13 may have a second arc sliding groove 132. Correspondingly, with reference to FIG. 9, the door plate assembly 12 may further include a second sliding block 125 that fits with the second arc sliding groove 132. A central axis of the second arc sliding groove 132 is parallel to a central axis of the first arc sliding groove 122, so that a rotation axis between the door plate assembly 12 and the base 11 is parallel to a rotation axis between the fastening bracket 13 and the door plate assembly 12.

The fastening bracket 13 may be roughly of a columnar structure, and the second arc sliding groove 132 may be located on a side wall 131 of the fastening bracket 13. The second arc sliding groove 132 may include a third side wall 1321 and a fourth side wall 1322 that are provided opposite to each other (the third side wall 1321 may be a lower side wall of the second arc sliding groove 132 in FIG. 12, and the fourth side wall 1322 may be an upper side wall of the second arc sliding groove 132 in FIG. 12). Both the third side wall 1321 and the fourth side wall 1322 are arc surfaces, and the third side wall 1321 and the fourth side wall 1322 are bent in a same direction into arcs.

Refer to FIG. 9 and FIG. 12. The second sliding block 125 is connected to the door plate body 121. The second sliding block 125 may include a third sliding wall 1251 and a fourth sliding wall 1252 that are provided opposite to each other (the third sliding wall 1251 may be a lower side wall of the second sliding block 125 in FIG. 9, and the fourth sliding wall 1252 may be an upper side wall of the second sliding block 125 in FIG. 9). The third sliding wall 1251 is an arc surface that fits with the third side wall 1321, and the fourth sliding wall 1252 is an arc surface that fits with the fourth side wall 1322. Through the foregoing arrangement, the second sliding block 125 may be slidably disposed in the second arc sliding groove 132, so that the door plate body 121 is rotatably connected to the fastening bracket 13. A sliding direction of the second sliding block 125 is an extension direction of the second arc sliding groove 132.

It may be understood that the second sliding block 125 and the second arc sliding groove 132 also form a revolute joint. Accumulated clearances of a plurality of revolute joints cause aggravation of the shaking of the rotating mechanism 10, affecting use experience of a product.

Based on the foregoing structure, with reference to FIG. 12, the at least one door plate assembly 12 may further include a second extrusion member 15. In some embodiments, one of the two door plate assemblies 12 includes the second extrusion member 15, or each of the two door plate assemblies 12 includes the second extrusion member 15.

The second extrusion member 15 is mounted on the fastening bracket 13, and the second extrusion member 15 squeezes the second sliding block 125 in a second target direction Y. The second target direction is perpendicular to the sliding direction S2 of the second sliding block 125, and points to a side wall that is of the second arc sliding groove 132 and that faces the second sliding block 125. Herein, the sliding direction S2 of the second sliding block 125 is the extension direction of the second arc sliding groove 132. With reference to FIG. 9 and FIG. 12, the second extrusion member 15 may be located below the second sliding block 125, and the second extrusion member 15 may squeeze the third sliding wall 1251 of the second sliding block 125. A clearance between the fourth sliding wall 1252 of the second sliding block 125 and the fourth side wall 1322 of the second arc sliding groove 132 is reduced under an extrusion action of the second extrusion member 15 on the second sliding block 125. When an extrusion force of the second extrusion member 15 on the second sliding block 125 is large enough, zero clearance between the fourth sliding wall 1252 of the second sliding block 125 and the fourth side wall 1322 of the second arc sliding groove 132 can be achieved. This helps alleviate the shaking of the rotating mechanism 10 during use. Herein, the second target direction Y may be a direction from the third sliding wall 1251 of the second sliding block 125 to the fourth side wall 1322.

In conclusion, through the foregoing arrangement, the second extrusion member 15 squeezes the second sliding block 125 toward a side wall of the second arc sliding groove 132, so that a fit clearance between the second sliding block 125 and the second arc sliding groove 132 is reduced, thereby helping further alleviate the shaking of the rotating mechanism 10 during use.

Still refer to FIG. 12. The fastening bracket 13 may include a second mounting groove 133. The second mounting groove 133 may communicate with the second arc sliding groove 132, and the second extrusion member 15 is mounted in the second mounting groove 133, so that the second extrusion member 15 is connected to the fastening bracket 13. The side wall that is of the second arc sliding groove 132 and that faces the second sliding block 125 is recessed to form the second mounting groove 133, and at least a part of the second extrusion member 15 is located in the second mounting groove 133. For example, the third side wall 1321 of the second arc sliding groove 132 may be recessed to form the second mounting groove 133, and there is a communication opening 134 between the second arc sliding groove 132 and the second mounting groove 133, so that the second mounting groove 133 can communicate with the second arc sliding groove 132 through the communication opening 134.

In some embodiments, the second extrusion member 15 includes a wear-resistant block 15a. FIG. 13 is a diagram of a structure of a wear-resistant block 15a according to an embodiment of this application. As shown in FIG. 13, the wear-resistant block 15a may be made of a material with high wear resistance, to avoid severe wear of the second extrusion member 15 after being used for a long time, which affects fitting between the second extrusion member 15 and the second sliding block 125.

For example, the wear-resistant block 15a further includes a contact surface 151 that is in contact with the second sliding block 125. The contact surface 151 is located at an end that is of the wear-resistant block 15a and that is away from the second mounting groove 133. A part of the wear-resistant block 15a may extend into the second arc sliding groove 132 from the first mounting groove 112, so that the contact surface 151 can be in contact with the third sliding wall 1251 of the second sliding block 125. A shape of the contact surface 151 may be correspondingly disposed based on a shape of the second sliding block 125. As shown in FIG. 13, when the third sliding wall 1251 of the second sliding block 125 is an arc surface, the contact surface 151 may be an arc surface that fits with the third sliding wall 1251.

It may be understood that both materials of the fastening bracket 13 and the second sliding block 125 are generally metal. When the second sliding block 125 slides in the second arc sliding groove 132 of the fastening bracket 13, two metal members with high hardness are in contact, resulting in jamming during relative rotation of the two metal members. In this embodiment of this application, hardness of the wear-resistant block 15a may be less than hardness of the fastening bracket 13. This helps implement hard extrusion between the wear-resistant block 15a and the second sliding block 125, and alleviate jamming during rotation of the second sliding block 125.

Further, roughness of the contact surface 151 may be less than roughness of a groove wall of the second arc sliding groove 132. Because the roughness of the contact surface 151 is less than the roughness of the second arc sliding groove 132, a friction coefficient between the wear-resistant block 15a and the second sliding block 125 is further reduced. This helps improve jamming during rotation of the second sliding block 125.

In some embodiments, a material of the wear-resistant block 15a includes POM (polyoxymethylene, polyoxymethylene) and/or PEEK (polyetheretherketone, polyetheretherketone). The POM and the PEEK have high wear resistance. This helps prevent the second extrusion member 15 from wearing after being used for a long time. In addition, the POM and the PEEK further have self-lubricating properties. This helps further reduce the friction coefficient between the wear-resistant block 15a and the second sliding block 125, and further improve rotation smoothness of the second sliding block 125.

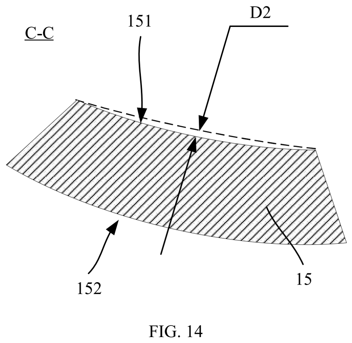

Based on the foregoing structure, the wear-resistant block 15a may be in zero-clearance fit or interference fit with the second sliding block 125. Herein, "zero-clearance fit" means that the wear-resistant block 15a is in contact with the second sliding block 125, but the wear-resistant block 15a is not deformed. "Interference fit" means that the wear-resistant block 15a is in contact with the second sliding block 125, and the wear-resistant block 15a is elastically deformed. A magnitude of interference between the wear-resistant block 15a and the second sliding block 125 is adjusted, so that an assembled wear-resistant block 15a can always be in an elastically deformed state. FIG. 14 is a sectional view of the wear-resistant block 15a in FIG. 13 along a section line C-C. Refer to FIG. 14. The "magnitude of interference" may be understood as a deformation amount of the wear-resistant block 15a after being elastically deformed. A value range of the magnitude of interference between the wear-resistant block 15a and the second sliding block 125 may range from 0.05 mm to 0.1 mm. For example, the magnitude of interference between the wear-resistant block 15a and the second sliding block 125 may be 0.05 mm, 0.07 mm, 0.09 mm, or 0.1 mm. When the magnitude of interference between the wear-resistant block 15a and the second sliding block 125 approaches 0.05 mm, the deformation amount of the wear-resistant block 15a is small, that is, an elastic restoring force applied by the wear-resistant block 15a to the second sliding block 125 is small. This helps ensure smooth rotation of the second sliding block 125. When the magnitude of interference between the wear-resistant block 15a and the second sliding block 125 approaches 0.1 mm, the elastic restoring force applied by the wear-resistant block 15a to the second sliding block 125 is large. This helps reduce the fit clearance between the second sliding block 125 and the second arc sliding groove 132, thereby alleviating the shaking of the rotating mechanism 10 during use.

As described in the foregoing embodiment, with reference to FIG. 12, there is the communication opening 134 between the second mounting groove 133 and the second arc sliding groove 132. The wear-resistant block 15a further includes a fitting surface 152 that is provided opposite to the contact surface 151, and an area of the communication opening 134 is less than an area of the fitting surface 152. For example, the fitting surface 152 of the wear-resistant block 15a is located at an end that is of the wear-resistant block 15a and that faces a groove bottom 133 of the second mounting groove 133, so that the contact surface 151 and the fitting surface 152 of the wear-resistant block 15a are provided opposite to each other. The wear-resistant block 15a may be roughly a wedge. An area of the contact surface 151 of the wear-resistant block 15a may be less than the area of the fitting surface 152 of the wear-resistant block 15a, so that the contact surface 151 of the wear-resistant block 15a is located at a tip of the wedge. Correspondingly, a shape of the second mounting groove 133 may be correspondingly disposed based on a shape of the wear-resistant block 15a, to implement mounting and fastening of the wear-resistant block 15a. In other words, the area of the communication opening is also less than an area of the groove bottom 133 of the second mounting groove 133.

Through the foregoing arrangement, because the area of the communication opening 134 is less than the area of the fitting surface 152, the wear-resistant block 15a can be prevented from falling off from the communication opening 134 during movement of the rotating mechanism 10. This helps improve connection reliability and structural movement stability.

As described in the foregoing embodiment, the second arc sliding groove 132 is located on the side wall 131 of the fastening bracket 13. Because the second mounting groove 133 is formed by recessing the third side wall 1321 of the second arc sliding groove 132, the second mounting groove 133 is also located on the side wall. When the wear-resistant block 15a is mounted in the second mounting groove 133, the wear-resistant block 15a may be embedded into the second mounting groove 133. Further, the wear-resistant block 15a may be in interference fit with the second mounting groove 133.

It may be understood that the fastening bracket 13 needs to be provided with only the second mounting groove 133, to implement mounting of the wear-resistant block 15a, and there is no need to dispose another assembly part or component. Through the foregoing arrangement, the wear-resistant block 15a can be connected to the fastening bracket 13 without using a bonding structure, for example, an adhesive. This helps improve mounting efficiency of the second extrusion member 15. In addition, through the foregoing arrangement, the wear-resistant block 15a can be mounted without adding another part or component. This helps reduce mounting space of the wear-resistant block 15a and implement lightness and thinness of the rotating mechanism 10.

Further, after the wear-resistant block 15a is embedded into the second mounting groove 133, the fastening bracket 13 may be connected to a corresponding mechanical part (for example, the first mechanical part 21 or the second mechanical part 22), and a part of a structural body is located on a side that is of the side wall of the fastening bracket 13 and on which the wear-resistant block 15a is mounted. Through the foregoing arrangement, the structure body can further achieve a limiting effect. This helps the wear-resistant block 15a to be detached from the side wall of the fastening bracket 13, to further improve the connection reliability and the structural movement stability.

In some implementations, the first extrusion member 14 may include the wear-resistant block 15a in the foregoing embodiment. Similarly, the second extrusion member 15 may include the elastic sheet 14a in the foregoing embodiment. In the rotating mechanism 10, mounting positions of the wear-resistant block 15a and the elastic sheet 14a may be exchanged.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A rotating mechanism, comprising:
a base and two door plate assemblies located on two opposite sides of the base, wherein the door plate assembly comprises a door plate body, the door plate body has a first arc sliding groove, the base comprises a first sliding block that fits with the first arc sliding groove, and the first sliding block is mounted in the first arc sliding groove; and
at least one door plate assembly further comprises a first extrusion member, the first extrusion member is mounted on the base, the first extrusion member squeezes the door plate body in a first target direction, and the first target direction is perpendicular to a sliding direction of the first sliding block, and points to a side wall that is of the first sliding block and that faces the first arc sliding groove.

2. The rotating mechanism according to claim 1, wherein the first extrusion member comprises an elastic sheet, the elastic sheet is connected to the base, and the elastic sheet is in elastic contact with the door plate body.

3. The rotating mechanism according to claim 2, wherein the base further comprises a first mounting groove, a side wall of the first mounting groove protrudes to form the first sliding block, the door plate body comprises a side surface and a bottom surface, the side surface faces the side wall of the first mounting groove, the side surface is recessed to form the first arc sliding groove, the bottom surface faces a bottom wall of the first mounting groove, and the elastic sheet is located between the bottom wall of the first mounting groove and the bottom surface.

4. The rotating mechanism according to claim 3, wherein the elastic sheet comprises a first elastic arm and a second elastic arm, the first elastic arm is connected to the second elastic arm, an included angle between the first elastic arm and the second elastic arm is an obtuse angle, and one of the first elastic arm and the second elastic arm is in elastic contact with the door plate body.

5. The rotating mechanism according to claim 4, wherein an end that is of one elastic arm and that is away from the other elastic arm has a mounting hole, the side wall of the first mounting groove has a fitting hole, the first extrusion member further comprises a pin shaft, and the pin shaft penetrates the mounting hole and the fitting hole.

6. The rotating mechanism according to any one of claims 1 to 5, further comprising two fastening brackets located on the two opposite sides of the base, wherein the fastening bracket has a second arc sliding groove, the door plate assembly further comprises a second sliding block that fits with the second arc sliding groove, and a central axis of the second arc sliding groove is parallel to a central axis of the first arc sliding groove; and
the at least one door plate assembly further comprises a second extrusion member, the second extrusion member is mounted on the fastening bracket, the second extrusion member squeezes the second sliding block in a second target direction, and the second target direction is perpendicular to a sliding direction of the second sliding block, and points to a side wall that is of the second arc sliding groove and that faces the second sliding block.

7. The rotating mechanism according to claim 6, wherein the second extrusion member comprises a wear-resistant block, and hardness of the wear-resistant block is less than hardness of the fastening bracket.

8. The rotating mechanism according to claim 7, wherein the wear-resistant block comprises a contact surface that is in contact with the second sliding block, and roughness of the contact surface is less than roughness of a groove wall of the second arc sliding groove.

9. The rotating mechanism according to claim 7 or 8, wherein a material of the wear-resistant block comprises POM and/or PEEK.

10. The rotating mechanism according to any one of claims 7 to 9, wherein a side wall that is of the second arc sliding groove and that faces the second sliding block is recessed to form a second mounting groove, and at least a part of the wear-resistant block is located in the second mounting groove.

11. The rotating mechanism according to claim 10, wherein there is a communication opening between the second mounting groove and the second arc sliding groove, the wear-resistant block further comprises a fitting surface that is provided opposite to the contact surface, and an area of the communication opening is less than an area of the fitting surface.

12. A foldable display terminal, comprising: the rotating mechanism according to any one of claims 1 to 11;
a first mechanical part and a second mechanical part, wherein the first mechanical part and the second mechanical part are connected to two sides of the rotating mechanism; and
a flexible display, wherein the flexible display is located on a same side of the first mechanical part and the second mechanical part, and is connected to the first mechanical part and the second mechanical part, and the flexible display is further connected to the rotating mechanism.
